**Europäisches Patentamt**

**European Patent Office**

**Office européen des brevets**

(11) Veröffentlichungsnummer: **0 205 926**
**A1**

(12) ## EUROPÄISCHE PATENTANMELDUNG

(21) Anmeldenummer: **86106882.3**

(22) Anmeldetag: **21.05.86**

(51) Int. Cl.⁴: **A 47 B 47/00, A 47 F 5/13**

(30) Priorität: **30.05.85 IT 2203285 U**

(43) Veröffentlichungstag der Anmeldung: **30.12.86**
**Patentblatt 86/52**

(84) Benannte Vertragsstaaten: **DE FR GB**

(71) Anmelder: **Perotti, Giuseppe, Via Padana Superiore, 122, I-20060 Bellinzago Lomb. (IT)**

(72) Erfinder: **Perotti, Giuseppe, Via Padana Superiore, 122, I-20060 Bellinzago Lomb. (IT)**

(74) Vertreter: **Freischem, Werner, Dipl.-Ing. et al, Patentanwälte Dipl.-Ing. W. Freischem Dipl.-Ing. I. Freischem An Gross St. Martin 2, D-5000 Köln 1 (DE)**

(54) **Rohrelement für Zusammensetzbare Strukturen.**

(57) Ein stangenförmiges Rohrelement (1) für zusammensetzbare Strukturen ist mit Einrichtungen zum Verbinden des Rohrelementes mit einem vielflächigen, insbesondere würfelförmigen, Verbindungselement ausgestattet, das an jeder Fläche mit einer Gewindebohrung versehen ist. Damit diese Rohrelemente ohne Beeinträchtigung ihrer Form und ohne Spezialwerkzeuge schnell zu unterschiedlichen Strukturen montiert werden können, ist an einem Ende des Rohrelementes (1) ein vorragender Gewindebolzen (19) fest eingesetzt und am anderen Ende ist eine Schraube (13) vorgesehen, deren Kopf (15) frei drehbar und um ein beschränktes Maß axial beweglich in dem Rohrelement (1) gehalten ist und an deren vorragendem Schaftende (14) eine Vielkant-Ausnehmung zum Einsetzen eines Stift-Schlüssels angeordnet ist.

ACTORUM AG

1

Anmelder: Giuseppe Perotti

Bezeichnung: Rohrelement für zusammensetzbare Strukturen

Die Erfindung geht aus von einem stangenförmigen Rohrelement für zusammensetzbare Strukturen mit Einrichtungen zum Verbinden des Rohrelementes mit einem vielflächigen, insbesondere würfelförmigen Verbindungselement, das an jeder Fläche mit einer Gewindebohrung versehen ist. Diese Rohrelemente und Verbindungselemente bilden im montierten Zustand ein Gerüst, insbesondere für den Aufbau von Möbeln, Regalen, Vitrinen und Messeständen.

Bekannte Rohrelemente dieser Art haben an ihren Enden eingepreßte Buchsen, in denen frei beweglich eine Schraube mit Kopf und ein über das Ende des Rohrelementes vorstehender Gewindeschaft angeordnet sind. Um die Rohrelemente an den Verbindungselementen zu befestigen, wurden verschiedene Einrichtungen zum Anziehen der Schraube entwickelt. Ein bekanntes Rohrelement sieht nahe dem Rohrende eine axial verlaufende längliche Ausnehmung in der Rohrwandung vor, durch die ein spezieller Schraubendreher in eine mehrkantige Ausnehmung des Schraubenkopfes eingesetzt und die Schraube verdreht werden kann. Eine Zunge, die durch Ausstanzen und Hineindrücken eines Teils der Rohrwandung beim Bilden der Ausnehmung entstanden ist, bildet einen Anschlag für den Kopf der Schraube und verhindert, daß die Schraube aus der Buchse herausrutscht und in das Innere des Rohrelementes hineinfällt. Jedes Rohrelement dieser Art hat also eine störende axiale Ausnehmung in der Rohrwandung.
Ein anderes bekanntes Rohrelement weist eine Schraube auf, deren Gewindeschaft im rückwärtigen Bereich als Vierkant ausgebildet ist.

Auf diesen Vierkant ist eine dem Außendurchmesser des Rohrelementes angepaßte Muffe geschoben. Wird diese zwischen dem Rohrende des Rohrelementes und dem Verbindungselement angeordnete Muffe mittels einer speziellen Zange verdreht, so schraubt sich der Gewindeschaft in das Verbindungselement ein. Jedes Rohrelement dieser Art hat deshalb eine störende Fuge zwischen dem Rohrende und der Muffe.

Der vorliegenden Erfindung liegt die Aufgabe zugrunde, ein Rohrelement mit Einrichtungen zum Verbinden zu schaffen, bei denen Ausnehmungen in der Wandung der Rohrelemente oder besondere Muffen zum Anziehen der Schrauben vermieden werden und die ohne Spezialwerkzeug schnell zu unterschiedlichen Strukturen montiert werden können.

Diese Aufgabe wird erfindungsgemäß dadurch gelöst, daß an einem Ende des Rohrelementes ein vorragender Gewindebolzen fest eingesetzt ist und am anderen Ende eine Schraube vorgesehen ist, dere Kopf frei drehbar und um ein beschränktes Maß axial beweglich in dem Rohrelement gehalten ist, und an deren Schaftende eine Vielkant-Ausnehmung angeordnet ist.

Dieses erfindungsgemäße Rohrelement ist schnell montierbar, weil es mit seinem festen Gewindebolzen auf ein Verbindungselement aufgeschraubt werden kann, während das jeweilige andere Ende des Rohrelementes mit Hilfe eines durch die Gewindebohrungen des Verbindungselementes hindurchgeführten üblichen Stiftschlüssels angeschraubt wird, der in die Ausnehmung am Schaftende der axial beweglich im Rohrelement gehaltenen Schraube eingesetzt wird.

Weitere Merkmale der Erfindung ergeben sich aus den Unteransprüchen.

3

In der folgenden Beschreibung werden Ausführungsbeispiele der Erfindung unter Bezugnahme auf die Zeichnungen näher erläutert. Die Zeichnungen zeigen in

Fig. 1 eine Schnittansicht einer aus Buchse und Schraube
        bestehenden Einrichtung zum Verbinden der Rohrelemente;
Fig. 2 eine Schnittansicht der Endbereiche eines Rohrelementes und eine Ansicht eines Verbindungselementes;
Fig. 3 eine schaubildliche Ansicht eines Strukturmodells
        mit mehreren Rohrelementen und Verbindungselementen;
Fig. 4 Schnittansichten des Rohrelementes mit der darin
        einzusetzenden Einrichtung zum Anschrauben an die
        Verbindungselemente;
Fig. 5 eine Ansicht einer Schraube.

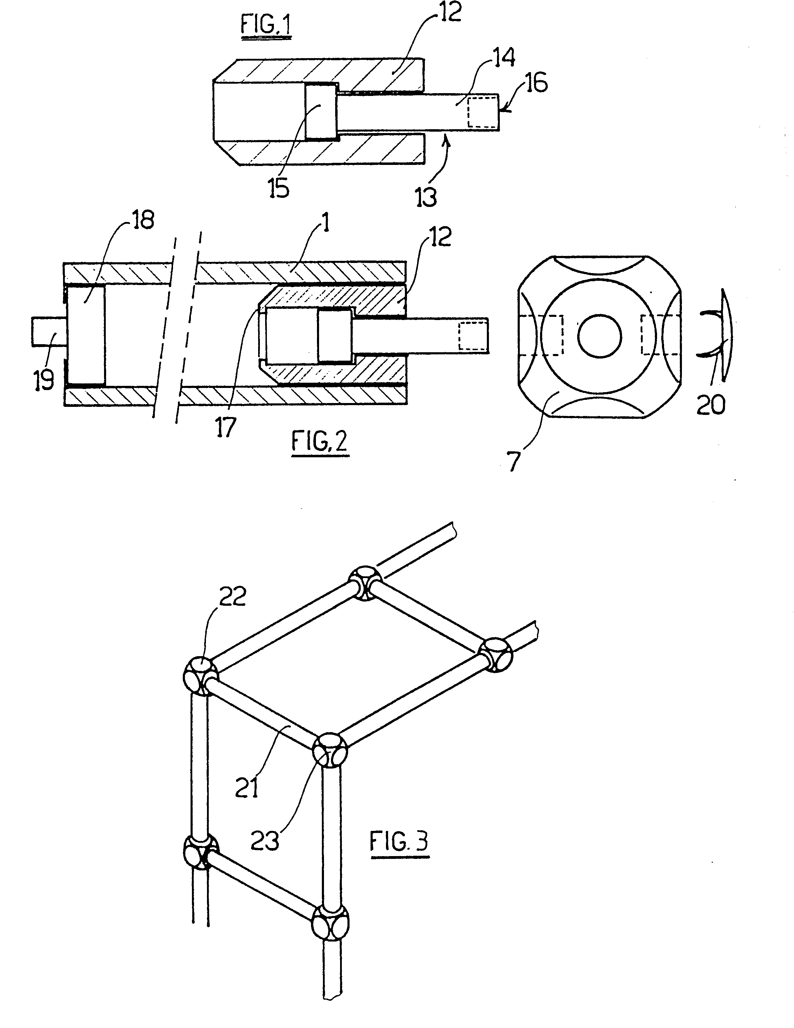

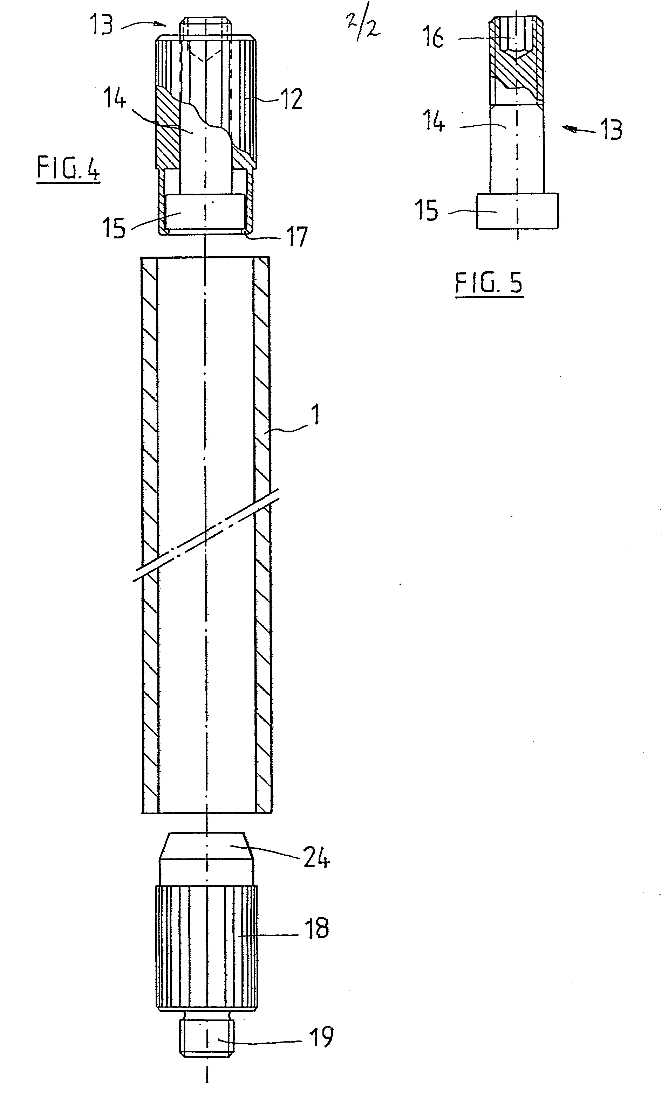

Das aus Fig. 2 und 4 ersichtliche Rohrelement 1 ist jeweils an seinen beiden Enden mit Einrichtungen zum Anschrauben an Verbindungselemente 7 versehen. Eine Einrichtung besteht nach Fig.1 aus einer Buchse 12, die eine
mit längsverlaufenden Rillen oder Riefen versehene Umfangsfläche hat und die eine gestufte Axialbohrung aufweist, in die eine Schraube 13 mit Kopf 15 gemäß Fig. 5
eingesetzt ist. Diese Schraube 13 hat einen mit Gewinde
versehenen Schaft 14, dessen freies Ende eine sechseckige
Ausnehmung 16 aufweist, die zur Aufnahme eines Stift-
schlüssels dient. Der Kopf 15 sitzt frei drehbar und
axial beweglich in der Buchse 12. Nach Einsetzen der
Schraube 13 in die Buchse 12 wird durch Eindrücken eines Randes 17 der Axialbohrung ein Anschlag geformt, der
das Herausfallen des Kopfes 15 verhindert. Der Anschlag
kann aber auch durch Einsetzen eines Stopfens gebildet
werden. Jede so vormontierte Buchse 12 mit Schraube 13
wird jeweils an einem Ende eines Rohrelementes 1 eingepreßt.

4

An dem entgegengesetzten Ende des Rohrelementes 1 ist ein vorragender Gewindebolzen 19 fest angeordnet. Ein Kopf 18 eines Gewindebolzens 19 kann drehfest in das Rohrelement 1 eingetrieben werden.

Fig. 4 zeigt den Gewindebolzen 19 mit seinem am Außenumfang mit Längsrillen versehenen Kopf 18 und die mit Längsrillen versehene Buchse 12, die ebenso wie der Kopf 18 verdrehfest in das Rohrelement 1 einzupressen ist. Ein Einführkonus 24 erleichtert das Eintreiben des des Kopfes 18.

Bei der Montage der Rohrelemente 1 zu einer Struktur geht man wie folgt vor: zuerst werden die Rohrelemente 1 mit ihrem feststehenden Gewindebolzen 19 an die Verbindungselemente 7 angeschraubt. Ist beispielsweise das aus Fig. 3 ersichtliche Rohrelement 21 bereits mit einem Verbindungselement 22 verschraubt, dann wird das Rohrelement 21 mit dem auf der gegenüberliegenden Seite befindlichen Verbindungselement 23 dadurch befestigt, daß man von außen durch die gegenüberliegenden Gewindebohrungen des würfelförmigen Verbindungselementes 23 hindurch einen Sechskant-Stift in die Ausnehmung 16 der Schraube 13 einsteckt und den Schaft 14 in das Verbindungselement 23 schraubt. Danach wird die Montage fortgesetzt, indem man die Rohrelemente 1 stets zuerst mit dem festen Gewindebolzen 19 an ein Verbindungselement 22,23 anschraubt. Freibleibende Gewindebohrungen der Verbindungselemente 22,23 werden mit aus Fig. 2 ersichtlichen aufklemmbaren Deckeln 20 verschlossen. Auf diese Weise erhält man eine leicht zu montierende Struktur, deren Ästhetik nicht durch Ausnehmungen in der Wandung der Rohrelemente oder durch Fugen zwischen den Rohrelementen und den Muffen gestört wird.

Bezugszeichenliste

1 Rohrelement

7 Verbindungselement

12 Buchse

13 Schraube

14 Schaft

15 Kopf

16 Ausnehmung

17 Rand

18 Kopf

19 Gewindebolzen

20 Deckel

21 Rohrelement

22 Verbindungselement

23 Verbindungselement

24 Einführkonus

PATENTANSPRÜCHE:

1. Stangenförmiges Rohrelement für zusammensetzbare Strukturen mit Einrichtungen zum Verbinden des Rohrelementes mit einem vielflächigen, insbesondere würfelförmigen Verbindungselement, das an jeder Fläche mit einer Gewindebohrung versehen ist,
dadurch gekennzeichnet, daß an einem Ende des Rohrelementes (1) ein vorragender Gewindebolzen (19) fest eingesetzt ist und am anderen Ende eine Schraube (13) vorgesehen ist, deren Kopf (15) frei drehbar und um ein beschränktes Maß axial beweglich in dem Rohrelement (1) gehalten ist, und an deren vorragendem Schaftende (14) eine Vielkant-Ausnehmung (16) zum Einsetzen eines Stift-Schlüssels angeordnet ist.

2. Rohrelement nach Anspruch 1, dadurch gekennzeichnet, daß der Kopf (15) der Schraube (13) in eine Buchse (12) eingesetzt ist, die in ein Ende des Rohrelementes (1) drehfest eingepreßt ist.

3. Rohrelement nach Anspruch 1, dadurch gekennzeichnet, daß ein Rand (17) einer den Kopf (18) der Schraube (13) aufnehmenden Bohrung der Buchse (12) radial nach innen gedrückt ist und einen Anschlag für den Kopf (15) bildet.

0205926

1/2

FIG.1

12

14

16

15

13

18

1

12

19

17

FIG.2

7

20

22

21

23

FIG.3

FIG.4

FIG. 5

**Europäisches Patentamt**

**EUROPÄISCHER RECHERCHENBERICHT**

| | EINSCHLÄGIGE DOKUMENTE | | EP 86106882.3 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CH - A - 439 868 (RACOLE TRADING & MANUFACTURING CO.LTD.)<br>* Spalte 1, Zeilen 19-31; Spalte 3, Zeilen 13-32; Fig.3, 5-8 *<br>-- | 1 | A 47 B 47/00<br>A 47 B 5/13 |
| Y | US - A - 3 632 147 (FINGER)<br>* Spalte 3, Zeilen 1-6; Spalte 4, Zeilen 18-44; Fig.6 *<br>-- | 1 | |
| A | GB - A - 1 439 159 (HEDLEY)<br>* Gesamt *<br>---- | | |

| | RECHERCHIERTE SACHGEBIETE (Int. Cl.4) |
|---|---|
| | A 47 B 47/00<br>A 47 B 57/00<br>A 47 B 96/00<br>A 47 F 5/00<br>F 16 B 7/00<br>F 16 B 12/00 |

Der vorliegende Recherchenbericht wurde für alle Patentansprüche erstellt.

| Recherchenort | Abschlußdatum der Recherche | Prüfer |
|---|---|---|
| WIEN | 26-08-1986 | HUBER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82